# EUROPEAN PATENT APPLICATION

(11) **EP 1 970 930 A1**
(43) Date of publication of application: **17.09.2008**
(21) Application number: 08152049.6
(22) Date of filing: 28.02.2008
(51) Int. Cl.: H01H 25/06, G06F 3/033

(54) **Operation input device and electronic instrument using the same**

(30) Priority: 16.03.2007 JP 2007068816
(71) Applicant: Omron Corporation, Kyoto-shi, Kyoto 600-8530 (JP)
(72) Inventor: Arihara, Takeshi, Shimogyo-ku, Kyoto-shi, Kyoto 600-8530 (JP); Yamasue, Toshinori, Shimogyo-ku, Kyoto-shi, Kyoto 600-8530 (JP); Kitagawa, Yoshiyasu, Shimogyo-ku, Kyoto-shi, Kyoto 600-8530 (JP)
(74) Representative: Brykman, Georges

(57) **Abstract**

The present invention provides a low-profile operation input device of which assembling work is easily performed and the productivity is high. An operation input device includes a base; a printed board in which a plurality of push-button switches are mounted on a circumference while an MR sensor is mounted, the printed board being integrally provided on the base; a ring operation plate placed on the push-button switches; a ring operation dial in which a ring magnet is integrally provided in a concentric fashion on a lower surface, the ring operation dial being coaxially placed on the operation plate; and a fixture inserted in a fixing hole of the operation dial, the fixture coupling at least two elastic pawls to the base, thereby retaining the operation dial while rotatably supporting the operation dial, the elastic pawls being projected from a lower surface of the fixture.

## Description

### BACKGROUND OF THE INVENTION

### 1. Field of the Invention

The present invention relates to an operation input device which is applicable to a mobile telephone and a portable music player.

### 2. Description of the Related Art

Conventionally, for example, an operation input device incorporated in a mobile telephone and the like includes a base; a printed board which is integrally placed on the base with a plurality of push-button switches and a magnetic-field detection element mounted on an upper surface thereof; an operation plate which is supported by the base in a vertically movable manner on the printed board; and a disc-shaped operation dial which is rotatably fitted on an upper surface of the operation plate, a ring magnet in which N-poles and S-poles are alternatively arranged being fitted on a lower surface of the disc-shaped operation dial. In the operation input device, the magnetic-field detection element detects a change in magnetic flux of the ring magnet by rotating the disc-shaped operation dial, and the push-button switches are operated through the operation plate by pressing the disc-shaped operation dial (refer to, for example, Japanese Patent Application Laid-Open No. 2005-106126).

However, as shown in FIGS. 3 and 4 of Japanese Patent Application Laid-Open No. 2005-106126, in the above-described operation input device, an operation dial 70 is rotatably supported on an operation plate 50 supported by a metal base 10. In order that the operation plate 50 rotatably supports the operation dial 70, it is necessary that a predetermined thickness be ensured for the operation plate 50, which makes it difficult to realize a low-profile operation input device. In the case where the operation dial 70 is fitted on the metal base 10 with the operation plate 50 interposed in between, it is necessary that the operation plate 50 be fitted on the metal base 10 after the operation dial 70 is rigidly caulked to the operation plate 50, which results in troublesome assembling and low productivity.

### SUMMARY OF THE INVENTION

In view of the foregoing, the present invention provides a low-profile operation input device of which the assembling work is easily performed and thus the productivity is high.

In order to solve the above-mentioned problem, an operation input device according to the present invention includes: a base; a printed board in which a plurality of push-button switches are mounted on a circumference while a magnetic-field detection element is mounted, the printed board being integrally provided on the base; a ring operation plate which is placed on the push-button switches; a ring operation dial in which a ring magnet is integrally provided in a concentric fashion on a lower surface, the ring operation dial being coaxially placed on the operation plate; and a fixture which is inserted in a fixing hole of the operation dial, the fixture coupling at least two support legs to the base, thereby retaining the operation dial while rotatably supporting the operation dial, the support legs being projected from a lower surface the fixture, wherein the magnetic-field detection element can detect a change in magnetic flux of the ring magnet by rotating the operation dial, and the push-button switches can be operated through the operation plate by pressing down the operation dial.

According to the present invention, because the operation dial is rotatably supported with the fixture interposed in between, it is not necessary that the operation plate have a high rotation support function. Therefore, the operation plate and thus the operation input device can be reduced in thickness. Additionally, the fixture is coupled to the base, so that the operation dial can be retained while being rotatably supported. Therefore, the number of man-hours is decreased, and the productivity is enhanced.

According to an embodiment of the present invention, at least the two support legs projected from the lower surface of the fixture may elastically engage with at least two elastic holders which are cut and raised from the base. Accordingly, the fixture can be attached to the base through one-touch operation, so that the productivity is further enhanced.

According to another embodiment of the present invention, the fixture may be formed in a ring shape, the fixture may retain a push button in an operation hole thereof, and the push-button switches mounted on the printed board can be operated by the push button. Accordingly, a multifunctional operation input device can be obtained.

In an electronic instrument according to the present invention, the aforementioned operation input device is attached with the operation dial exposed so as to be operable from the outside.

Accordingly, the low-profile electronic instrument is obtained with high productivity.

### BRIEF DESCRIPTION OF THE DRAWINGS

FIGS. 1A and 1Bshow perspective views of an operation input device according to a first embodiment of the present invention when viewed from different angles;
FIG. 2 shows an exploded perspective view of the operation input device of FIG. 1A;
FIG. 3 shows a partially exploded perspective view of the operation input device of FIG. 2 when viewed from above;
FIGS. 4A and 4B show partially exploded perspective views of the operation input device of FIG. 2 when viewed from different angles;
FIG. 5 shows an exploded perspective view of the operation input device of FIG. 1 B;
FIG. 6 shows a partially exploded perspective view of the operation input device of FIG. 5 when viewed from below;
FIG. 7A shows a bottom view of the operation input device of FIG. 1A, and FIG. 7B shows a longitudinal cross-sectional view taken along the line B-B of FIG. 7A;
FIGS. 8A and 8B show longitudinal cross-sectional views taken along the lines VIIIA-VIIIA and VIIIB-VIIIB of FIG. 7A;
FIG. 9A shows a bottom view of the operation input device of FIG. 1, and FIG. 9B shows a longitudinal cross-sectional view taken along the line B-B of FIG. 9A;
FIGS. 10A and 10B show perspective views of an operation input device according to a second embodiment of the present invention when viewed from different angles;
FIG. 11 shows an exploded perspective view of the operation input device of FIG. 10A when viewed from above;
FIG. 12 shows a partially exploded perspective view of the operation input device of FIG. 11 when viewed from a different angle;
FIG. 13 shows an exploded perspective view of the operation input device of FIG. 10A when viewed from below;
FIG. 14 shows a partially exploded perspective view of the operation input device of FIG. 11 when viewed from below;
FIGS. 15A and 15B show longitudinal cross-sectional views of the operation input device of FIG. 10A; and
FIG. 16A shows a bottom view of the operation input device of FIG. 10A, and FIG. 16B shows a longitudinal cross-sectional view taken along the line B-B of FIG. 16A.

### DETAILED DESCRIPTION OF THE PREFERRED EMBODIMENTS

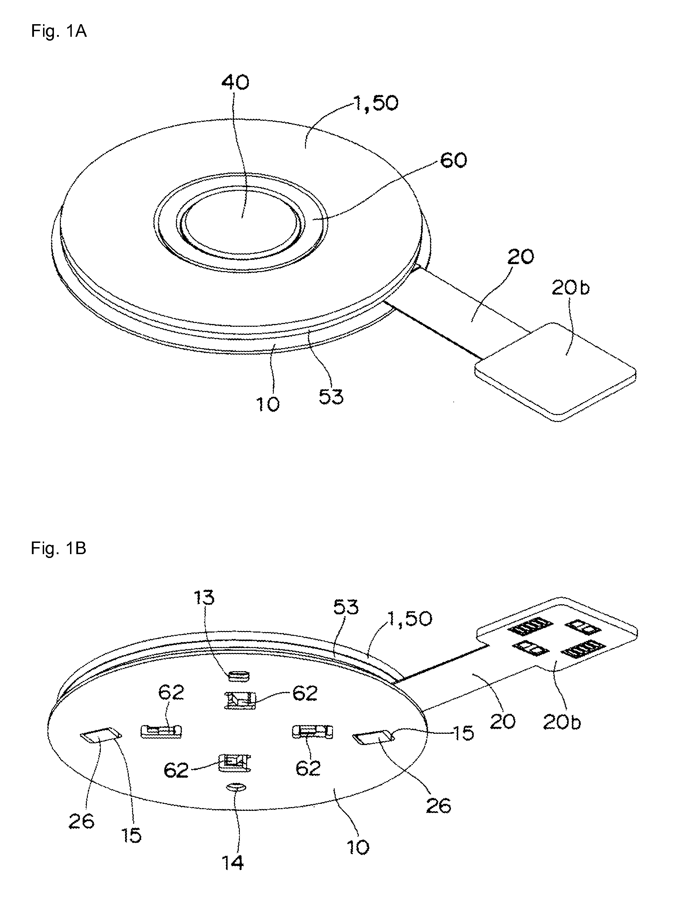

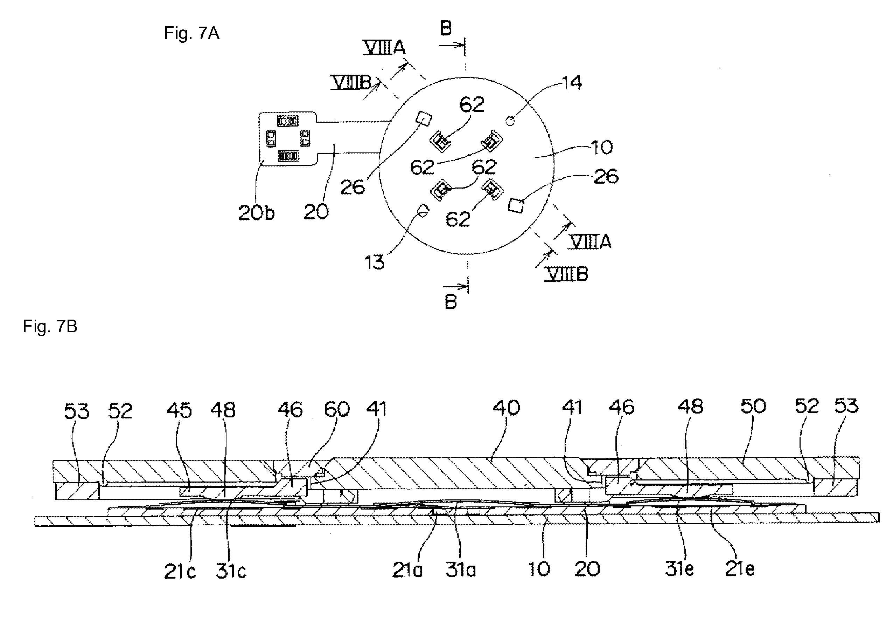

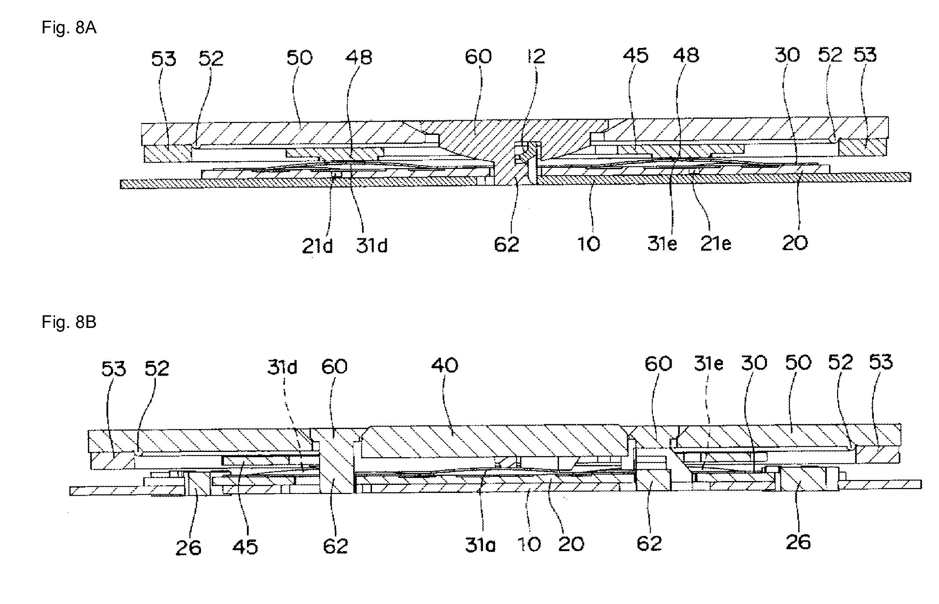

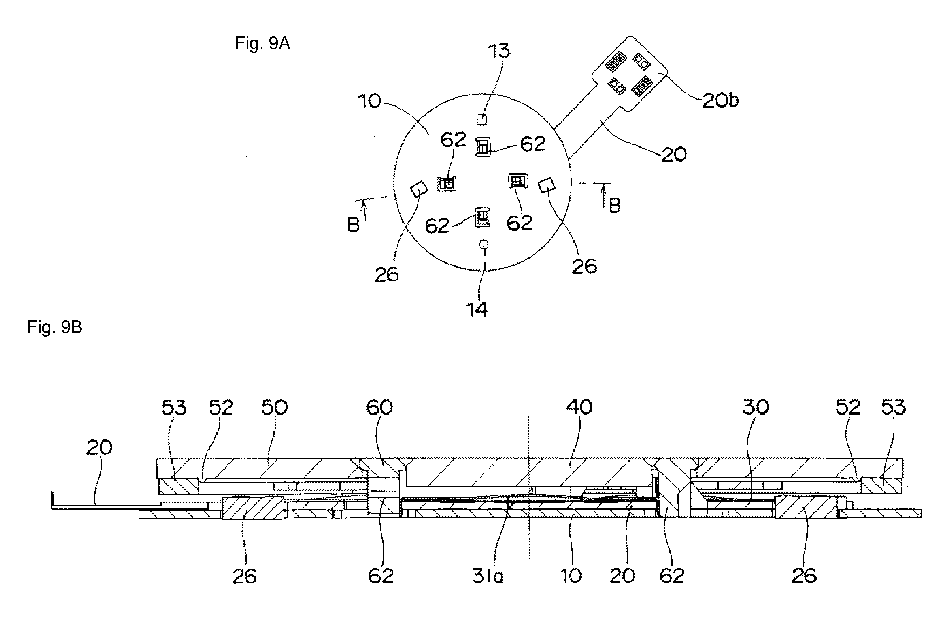

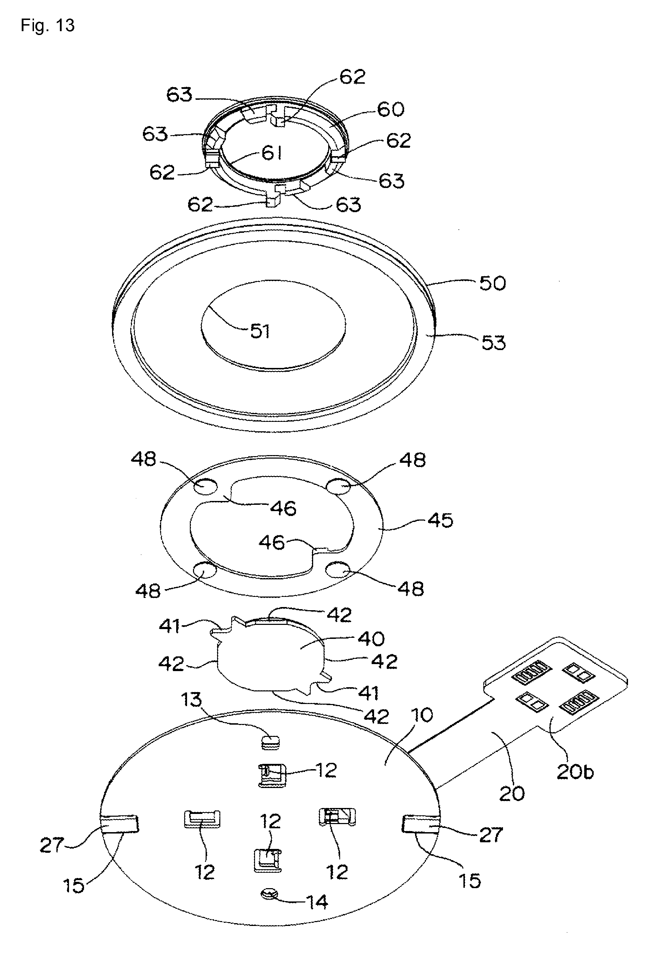

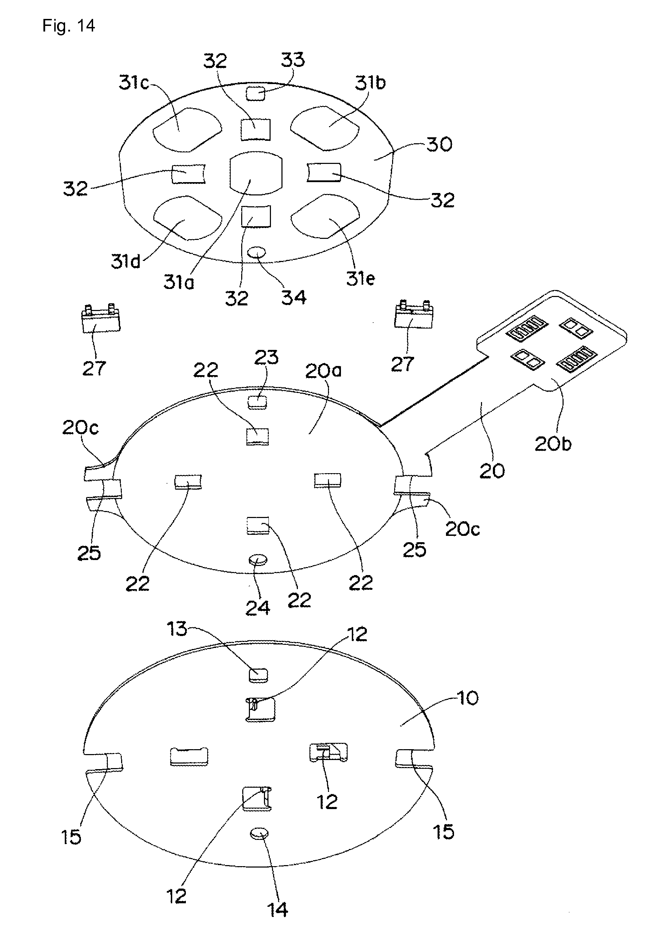

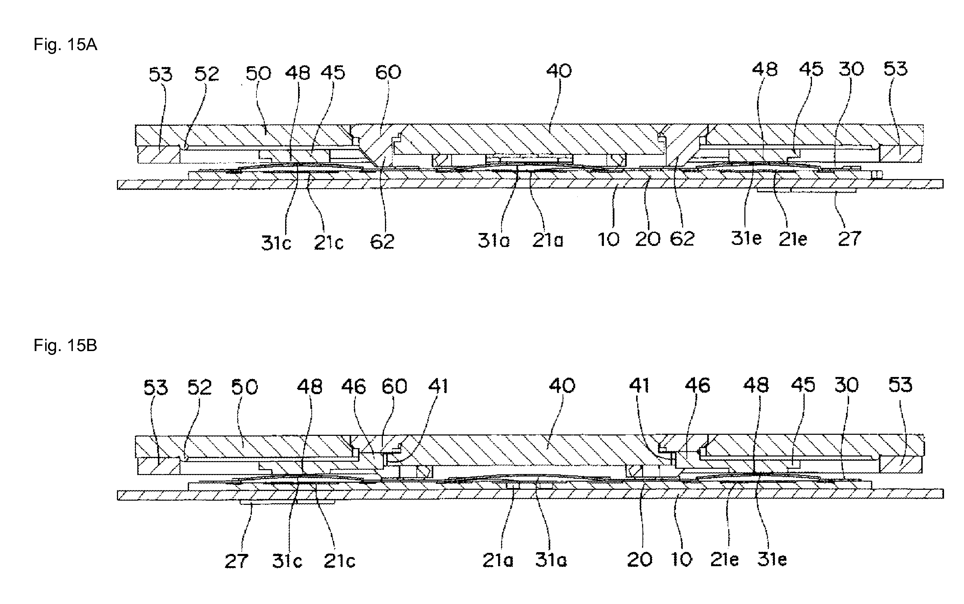

Preferred embodiments according to the present invention will be described below with reference to the accompanying drawings of FIGS. 1A to 16B. An operation input device 1 according to a first embodiment is incorporated in, e.g., a mobile telephone (not shown), so that a scroll bar in a monitor can be scrolled to provide a selection instruction through a later-described push button 40.

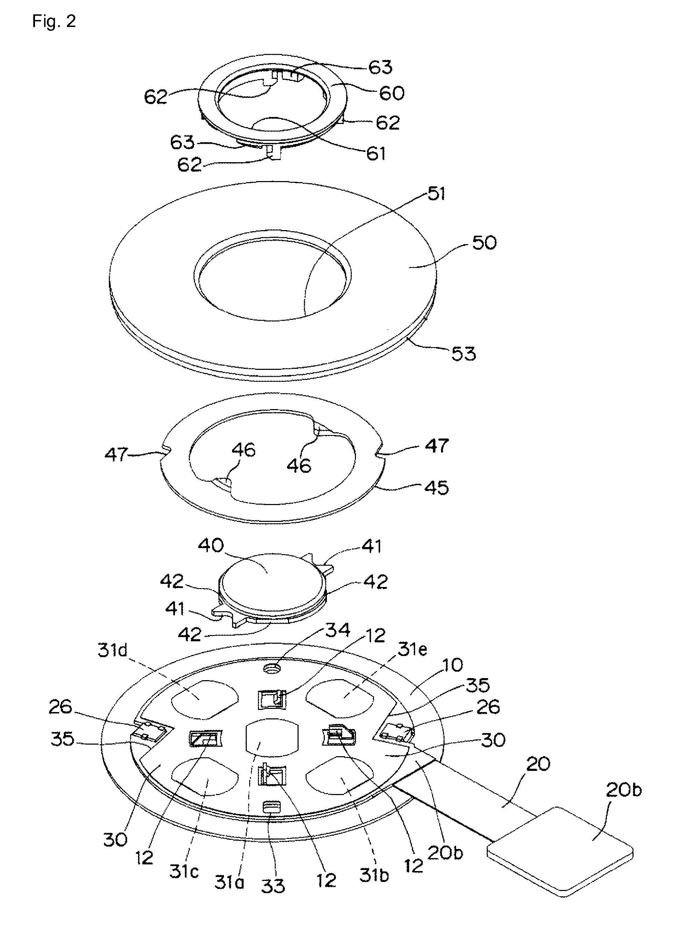

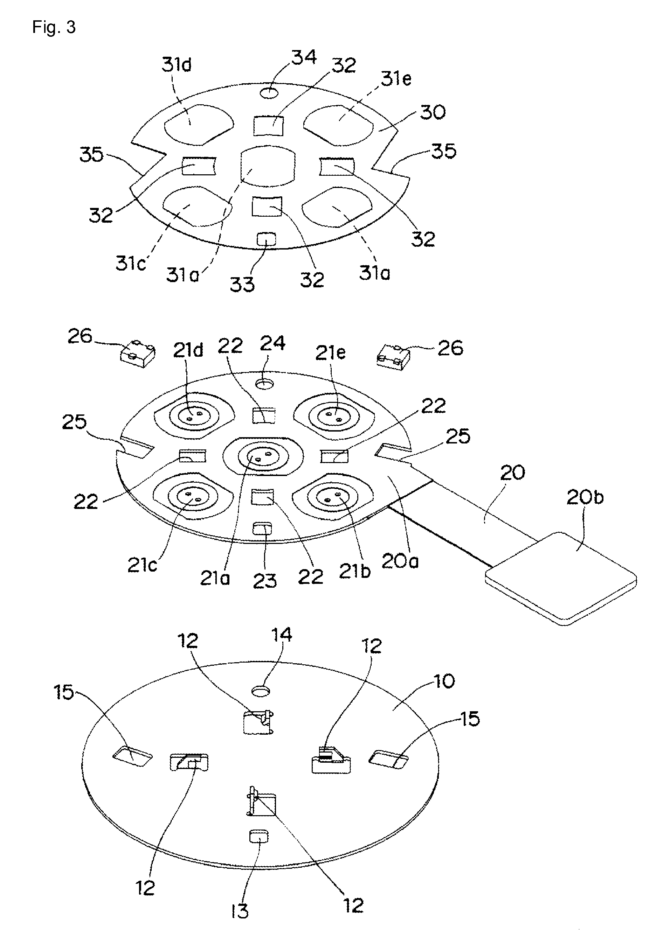

As shown in FIGS. 2 and 3, the operation input device 1 includes a metal base 10, a resin film cover 30, a push button 40, an operation plate 45, an operation dial 50, and a ring fixture 60. A flexible printed board 20 adheres integrally to the metal base 10. A central push-button switch 31a formed by a dome-shaped movable contact and four push-button switches 31b to 31e adhere to a lower surface of the resin film cover 30. The push button 40 is used to operate the central push-button switch 31a. The operation plate 45 is placed on the push-button switches 31b to 31e. A ring magnet 53 is fixed to a lower surface of the operation dial 50. The ring fixture 60 retains the operation dial 50 in the metal base 10.

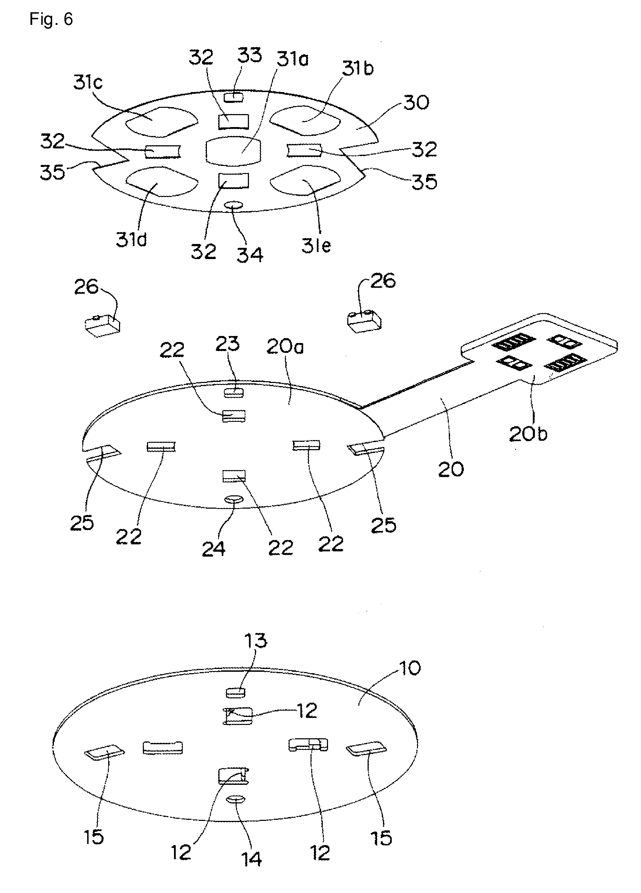

As shown in FIGS. 3 and 6, the metal base 10 is formed in a substantially circular shape, and four elastic holders 12 are cut and raised at equal pitches on a circumference with respect to the center of the base 10. In the elastic holders 12, jig holes 13 and 14 are provided outside a pair of opposing elastic holders 12 and 12, and clearance portions 15 and 15 in which MR sensors 26 and 26 are fitted are formed outside the remaining pair of elastic holders.

The printed board 20 formed of a flexible resin film includes a substantially circular board main body 20a and a lead portion 20b. An adhesive agent is applied onto a back side of the substantially circular board main body 20a, and the lead portion 20b is extended from the board main body 20a. A conductive portion 21a is provided at the center of the board main body 20a, and conductive portions 21b to 21e are arranged around the conductive portion 21a at equal pitches on a circumference. Each of the conductive portions 21a to 21e includes a ring fixed contact portion and a pair of fixed contact portions disposed in the ring fixed contact portion. In the printed board 20, engagement holes 22 and jig holes 23 and 24 are made at positions corresponding to the elastic holders 12 and the jig holes 13 and 14 of the metal base 10. In the board main body 20a, notches 25 in which the MR sensors 26 to be described later are fitted are formed in the outer peripheral edge. The MR sensors 26 have a characteristic of reacting to a laterally-passing magnetic flux to output a detection signal. The MR sensors 26 placed in an inverted manner are inserted in the notches 25 of the printed board 20 and connected to the printed board 20. In the conductive portions 21a to 21e, the fixed contact portions may concentrically be formed, and one of the fixed contact portions may be disposed at the center of the other fixed contact portion having a substantially C-shape when viewed from above.

The resin film cover 30 has a planar shape with which the board main body 20a can be covered. In the back side to which the adhesive agent is applied, push-button switches 31a to 31e formed of flat dome-shaped inversion springs adhere to positions corresponding to the conductive portions 21a to 21e respectively. In the resin film cover 30, engagement holes 32 and jig holes 33 and 34 are provided at positions corresponding to the elastic holders 12 and the jig holes 13 and 14 of the metal base 10 respectively. In the resin film cover 30, clearance portions 35 in which the MR sensors 26 are fitted are formed at the outer peripheral edge.

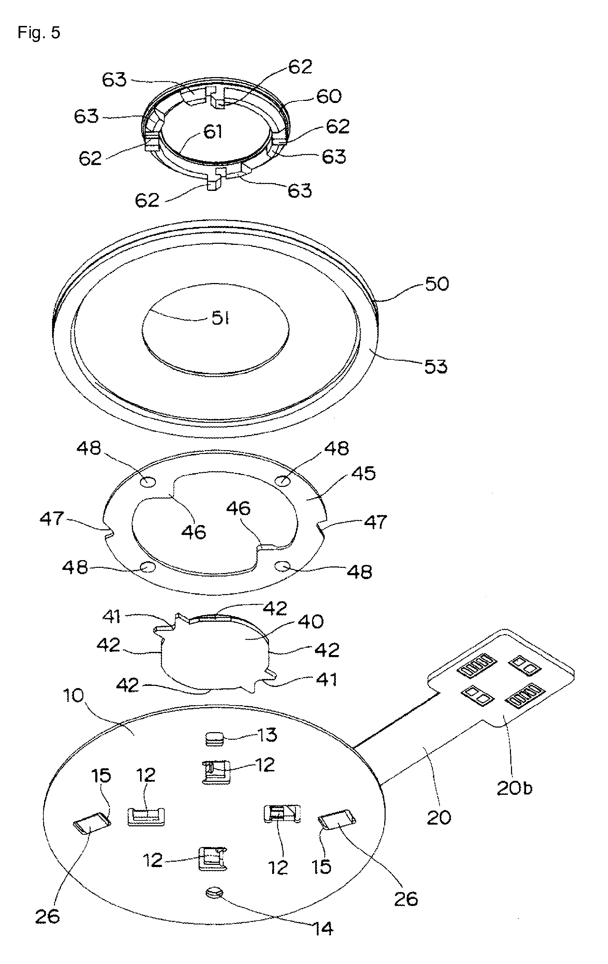

As shown in FIGS. 2 and 5, the push button 40 has an outer peripheral shape which can be fitted in a fixing hole 51 of an operation dial 50 to be described later, and a pair of rotation stopping pawls 41 and 41 is projected coaxially at lower edge portions of the outer periphery. Chamfers 42 are formed to prevent fluttering in base portions on both sides of the rotation stopping pawls 41.

The operation plate 45 is concentrically formed in a ring shape having a diameter which can be placed on the push-button switches 21b to 21e. A pair of rotation stopping projections 46 is projected at the inner peripheral edge of the operation plate 45, and the rotation stopping projections 46 are latched in the rotation stopping pawls 41 of the push button 40. Notches 47 are provided at positions corresponding to the clearance portions 15 of the metal base 10. Operating projections 48 are provided in a protruding manner on a lower surface of the operation plate 45 to press the push-button switches 21b to 21e. A sliding sheet may adhere integrally to an upper surface of the operation plate 45 to smoothly rotate the operation dial 50 which will be described later, a resin material having small frictional resistance may be applied to the operation plate 45, or satin finishing may be performed to the operation plate 45 to decrease the frictional resistance.

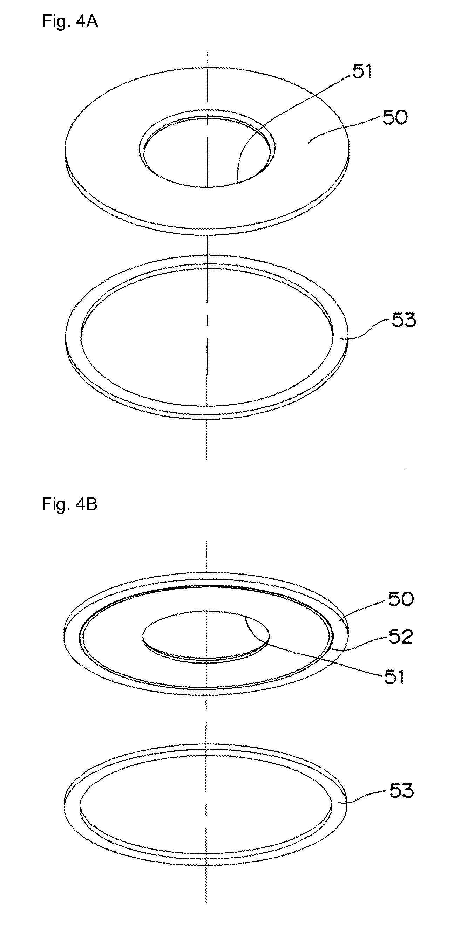

As shown in FIGS. 4A and 4B, the operation dial 50 is concentrically formed in a ring shape with which the metal base 10 can be covered, and a fixing hole 51 in which the push button 40 can be fitted is provided at the center of the operation dial 50. A ring magnet 53 is positioned and fixed to the operation dial 50 with a ring rib 52 interposed therebetween. The ring rib 52 is projected from the peripheral edge of the lower surface of the operation dial 50. N-poles and S-poles are alternately arranged in the ring magnet 53. Particularly, in the first embodiment, the ring magnet 53 does not directly contact the operation plate 45. Therefore, advantageously, the low-profile operation input device having small frictional resistance acting on the operation dial 50 and is capable of being smoothly operated is obtained. The operation dial 50 is not limited to the circular shape, but the operation dial 50 may be formed in, e.g., a regular octagonal shape as long as the operation dial 50 can be rotated.

As shown in FIGS. 2 and 5, the ring fixture 60 has an outer diameter with which the ring fixture 60 can be fitted in the fixing hole 51 of the operation dial 50 to retain the operation dial 50. The ring fixture 60 has an operation hole 61 having an inner diameter with which the push button 40 can be fitted in the ring fixture 60 to retain the push button 40. Support legs 62 are projected from the lower surface of the ring fixture 60, and the support leg 62 can elastically engage with the elastic holder 12 of the metal base 10. Position regulating projections 63 are provided on the ring fixture 60, and each position regulating projection 63 is located on one side of the base portion of the support leg 62.

A process for assembling the above-described components will be described below. A pair of positioning pins which are jigs (not shown) is inserted and positioned in the jig holes 13 and 14 in the metal base 10. Then, the pair of jig pins is inserted in the jig holes 23 and 24 of the printed board 20 on which the MR sensors 26 and 26 are mounted at predetermined positions, whereby the elastic holders 12 of the metal base 10 are fitted in the engagement holes 22 of the printed board 20 such that the elastic holders 12 are adhesively bonded integrally to the printed board 20. Then, the jig pins are inserted in the jig holes 33 and 34 of the resin film cover 30 to adhesively bond the resin film cover 30 integrally to the board main body 20a of the printed board 20, whereby the push-button switches 31a to 31e formed of the dome-shaped inversion springs are positioned in the conductive portions 21a to 21e respectively.

Then, the operation plate 45 is placed and positioned on the push-button switches 31b to 31e while the push button 40 is placed and positioned on the push-button switch 31a, whereby the rotation stopping projections 46 of the operation plate 45 are latched to the rotation stopping pawls 41 of the push button 40. After the push button 40 is fitted in the fixing hole 51 of the operation dial 50, the ring fixture 60 is inserted in a gap between the push button 40 and the operation dial 50, and the support legs 62 of the ring fixture 60 elastically engage with the elastic holders 12 of the metal base 10. Therefore, the ring fixture 60 retains the operation dial 50, and the ring fixture 60 also retains the push button 40 and the operation plate 45 in the metal base 10. Furthermore, the position regulating projections 63 of the ring fixture 60 meet the chamfers 42 of the push button 40 to prevent the rotation of the push button 40. Therefore, the rotation of the operation plate 45 engaging with the push button 40 is also prevented. The method for fixing the ring fixture 60 to the metal base 10 is not limited to the elastic engagement, and caulking or welding may also be adopted.

In the first embodiment, the push button 40 and the operation plate 45 placed on the push-button switches 31a to 31e are biased upward by spring force of the dome-shaped inversion springs. Therefore, the vertical fluttering is not generated, and excessive rotation caused by inertia force can be prevented in the operation dial 50, so that erroneous operation is hardly generated. The push button 40, the operation plate 45, and the operation dial 50 can be assembled on the metal base 10 through one-touch operation by fixing the ring fixture 60 to the metal base 10, so that an operation input device having excellent productivity can advantageously be obtained.

An operation method in the case of applying the operation input device 3 having the above-described configuration to a mobile telephone will be described below. When the operation dial 50 is rotated about the axis of the ring fixture 60, the operation dial 50 is rotated in a sliding manner on the operation plate 45 and the ring fixture 60. The ring magnet 53 integral with the operation dial 50 is also rotated, the pair of MR sensors 26 detects a change in magnetic field, and a rotating direction and a rotating amount are detected based on the detected change in magnetic field. The detection result is reflected as a movement of a scroll bar displayed on a monitor screen through a control circuit (not shown). When the scroll bar reaches a desired position, the push button 40 is pressed to invert the inversion spring of the central push-button switch 31a, and an electric current is passed through the corresponding conductive portion 21a to output a selection instruction. Alternatively, the peripheral portion of the operation dial 50 is pressed down, and the inversion springs of the push-button switches 31b to 31e are appropriately inverted by the pressing projections 48 of the operation plate 45, whereby current may be passed through the corresponding conductive portions 21b to 21e.

Accordingly, in the first embodiment, because the MR sensors 26 are used, it is not necessary that the ring magnet 53 be placed above the MR sensors 26, and advantageously, a low-profile operation input device can be obtained.

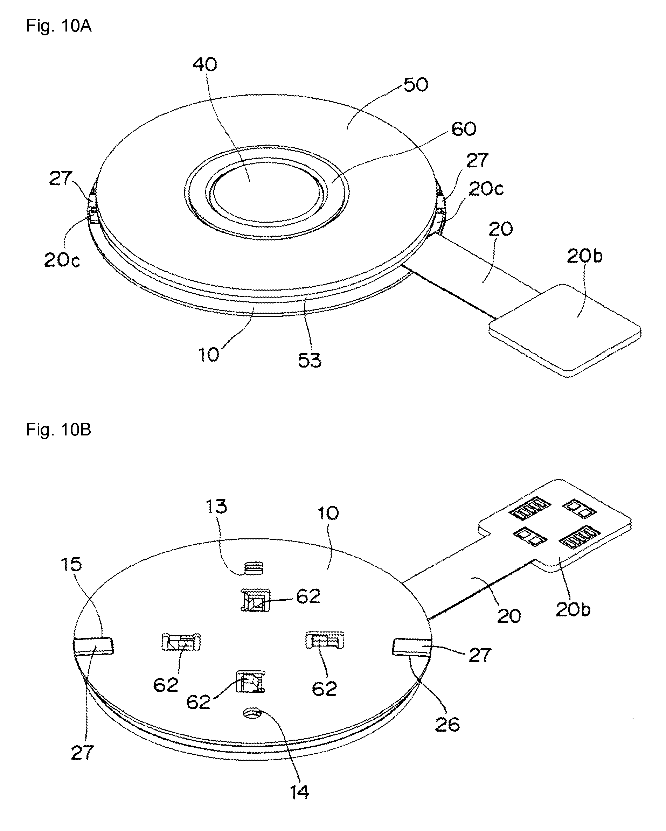

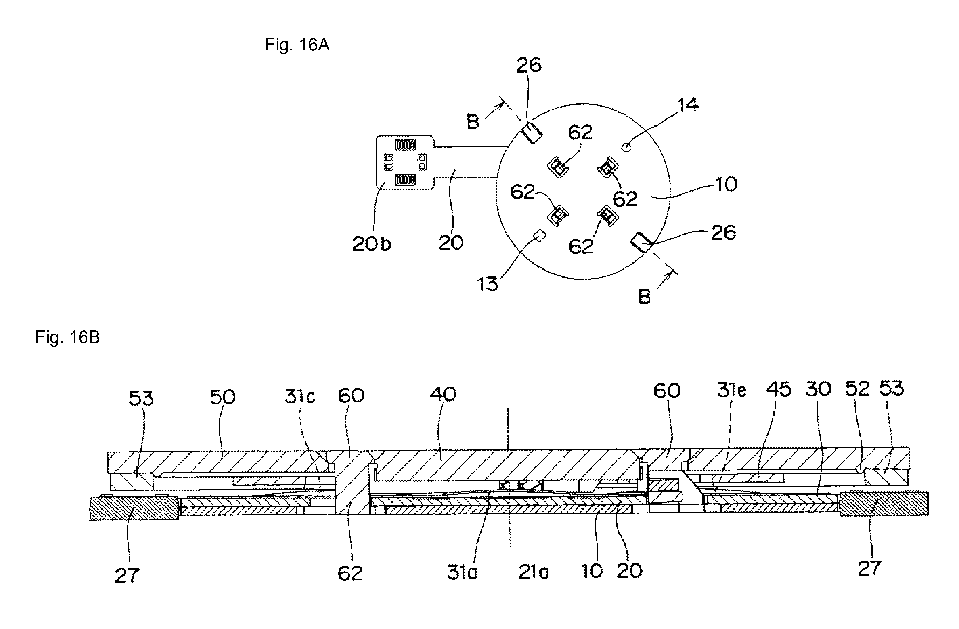

In a second embodiment, as shown in FIGS. 10A to 16B, a basic structure is substantially the same as that of the first embodiment. The second embodiment differs from the first embodiment in that a Hall element 27 is used. The Hall element 27 has a characteristic of detecting a vertically-passing magnetic flux to output an output signal. In the second embodiment, the same components as the first embodiment are designated by the same reference numerals, and only a different component is described.

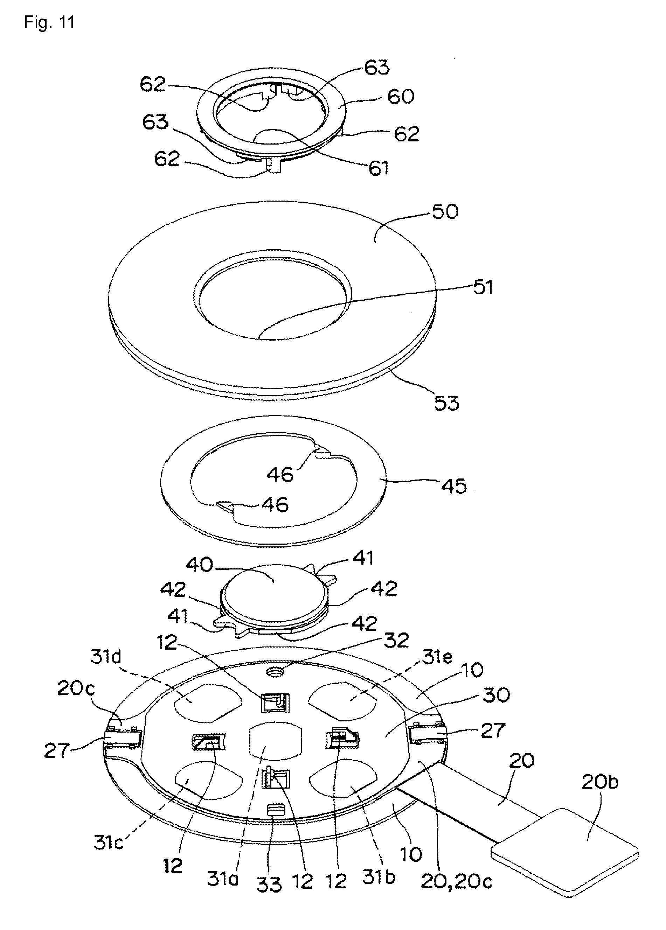

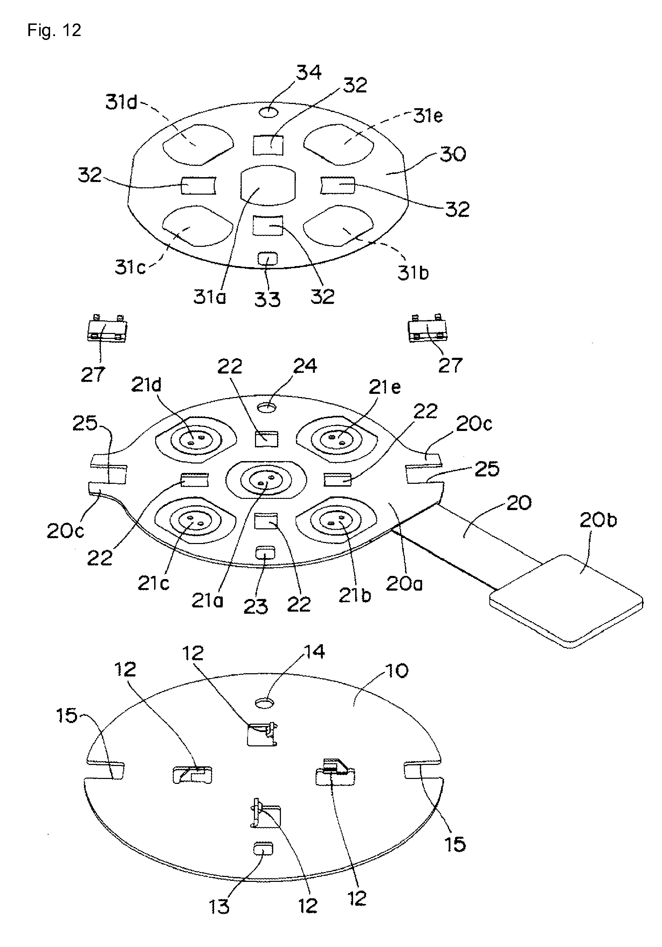

That is, in the second embodiment, because the Hall elements 27 are used, it is necessary that the Hall elements 27 be disposed immediately below the ring magnet 53. Therefore, notches 25 are provided in protrusions 20c extended from the outer peripheral edge of the printed board 20, and the inverted Hall elements 27 are disposed in the notches 25 (FIGS. 11 and 12), whereby the ring magnet 53 is disposed immediately above the Hall elements 27 (FIG. 16). Because other structures are identical to those of the first embodiment, the description is not repeated.

The operation input device according to the present invention can be applied not only to mobile telephones but also to other mobile instruments and other electronic instruments obviously.

## Claims

1. An operation input device comprising:
a base;
a printed board in which a plurality of push-button switches are mounted on a circumference and a magnetic-field detection element is mounted, the printed board being integrally provided on the base;
a ring operation plate placed on the push-button switches;
a ring operation dial in which a ring magnet is integrally provided in a concentric fashion on a lower surface, the ring operation dial being coaxially placed on the operation plate; and
a fixture inserted in a fixing hole of the operation dial, the fixture coupling at least two support legs to the base to retain the operation dial while rotatably supporting the operation dial, the support legs being projected from a lower surface of the fixture,
wherein the magnetic-field detection element detects a change in magnetic flux of the ring magnet by rotating the operation dial, and
the push-button switches are operable through the operation plate by pressing down the operation dial.

2. The operation input device according to claim 1, wherein the at least two support legs projected from the lower surface of the fixture elastically engage with at least two elastic holders which are cut and raised from the base.

3. The operation input device according to claim 1 or 2, wherein the fixture has a ring shape, the fixture retains a push button in an operation hole thereof, and the push-button switches mounted on the printed board can be operated by the push button.

4. An electronic instrument, wherein the operation input device of any one of claims 1 to 3 is attached with the operation dial exposed to be operable from the outside.
